# EUROPÄISCHE PATENTANMELDUNG

(11) **EP 3 059 122 A1**
(43) Veröffentlichungstag der Anmeldung: **24.08.2016**
(21) Anmeldenummer: 16000377.8
(22) Anmeldetag: 16.02.2016
(51) Int. Cl.: B60Q 1/26, B60Q 1/52

(54) **VORRICHTUNG, INSBESONDERE SIGNALMITTEL ZUM ANBRINGEN AN EINE FAHRZEUGSCHEIBE**

(30) Priorität: 18.02.2015 DE 102015001898
(71) Anmelder: Gemo D.G. Moritz GmbH & Co. Kg, 13407 Berlin (DE)
(72) Erfinder: Garn, Sascha, 13503 Berlin (DE)
(74) Vertreter: Hausfeld, Norbert

(57) **Zusammenfassung**

Beim Aufstellen des Warndreiecks setzen sich Fahrzeugführer eines liegengebliebenen Fahrzeugs (11) einer großen Gefahr aus. Insbesondere vor der Kenntlichmachung des liegengebliebenen Fahrzeugs (11) durch ein Warndreieck werden die Fahrzeugführer von nachfolgenden Fahrzeugen nur schlecht oder gar nicht gesehen. Es sind Abstandshalter bekannt, die an einer der Fahrbahn zugewandten Seite des Fahrzeuges (11) angebracht werden, um einen Bereich, in dem sich die Personen bewegen können, zu kennzeichnen. Diese Vorrichtungen sind jedoch aufwendig zu installieren, sowie sperrig und somit für das Mitführen in einem Fahrzeug ungeeignet. Die vorliegende Erfindung schafft eine Vorrichtung (10), mit der auf einfache Art und Weise ein liegengebliebenes Fahrzeug (11) kennzeichenbar ist. Dazu ist es vorgesehen, dass ein Signalelement (12) der Vorrichtung (10) aufblasbar ist.

## Beschreibung

Die Erfindung betrifft eine Vorrichtung, insbesondere ein Signalmittel zum Anbringen an eine Fahrzeugscheibe gemäß dem Oberbegriff des Anspruchs 1.

Im Straßenverkehr besteht die Pflicht, ein liegengebliebenes Fahrzeug durch ein Warndreieck zu kennzeichnen, und zwar so, dass nachfolgende Fahrzeuge rechtzeitig auf das liegengebliebene Fahrzeug hingewiesen werden. In den meisten Fällen werden defekte bzw. fahruntüchtige Fahrzeuge am rechten Fahrbahnrand bzw. auf dem Seitenstreifen abgestellt und im gleichen Bereich das Warndreieck aufgestellt.

Beim Aufstellen des Warndreiecks setzen sich die Fahrzeugführer des liegengebliebenen Fahrzeugs jedoch einer großen Gefahr aus. Insbesondere vor der Kenntlichmachung des liegengebliebenen Fahrzeugs durch ein Warndreieck werden die Fahrzeugführer von nachfolgenden Fahrzeugen nur schlecht oder gar nicht gesehen. Besonders bei schmalen Straßen, die keinen breiten Randstreifen aufweisen, auf dem liegengebliebene Fahrzeuge mit sicherem Abstand zur Fahrbahn abgestellt werden können, führt eine ungenügende Kennzeichnung des Fahrzeuges oftmals zu schweren Unfällen.

Es sind Abstandshalter bekannt, die an einer der Fahrbahn zugewandten Seite des Fahrzeuges angebracht werden, um einen Bereich, in dem sich die Personen bewegen können, zu kennzeichnen. Diese Vorrichtungen sind jedoch aufwendig zu installieren, sowie sperrig und somit für das Mitführen in einem Fahrzeug ungeeignet.

Der Erfindung liegt daher die Aufgabe zu Grunde, eine Vorrichtung zu schaffen mit der auf einfache Art und Weise ein liegengebliebenes Fahrzeug kennzeichenbar ist.

Eine Vorrichtung zur Lösung dieser Aufgabe weist die Merkmale des Anspruchs 1 auf. Demnach ist es erfindungsgemäß vorgesehen, dass die Vorrichtung mindestens ein Signalelement und mindestens ein Bedienelement aufweist, wobei das Signalelement aufblasbar ist. Die das Signalelement aufweisende Vorrichtung lässt sich aus dem Fahrzeug heraus an dem Fahrzeug anbringen, und zwar sowohl an der Fahrerseite als auch an der Beifahrerseite. Dazu braucht der Fahrzeugführer das Fahrzeug nicht verlassen. Die Vorrichtung ist jedoch nicht auf die Anwendung zur Kennzeichnung von Pkws beschränkt, vielmehr kann sie auch der Kennzeichnung von LKWs oder Motorrädern dienen.

Dadurch, dass das Signalelement aufblasbar ist bzw. die Luft auch wieder aus dem Signalelement ablassbar ist, lässt sich die Vorrichtung nach bzw. vor dem Gebrauch leicht im Fahrzeug verstauen, ohne signifikanten Platz in Anspruch zu nehmen. Das Aufblasen des Signalelements erfolgt vorzugsweise während die Vorrichtung zumindest teilweise aus dem Fenster gehalten wird. Über das Bedienelement kann der Fahrzeuginsasse die Vorrichtung steuern, insbesondere den Aufblasvorgang initiieren. Somit braucht der Fahrzeuginsasse zur Kennzeichnung des Fahrzeuges durch die erfindungsgenmäße Vorrichtung das Fahrzeug nicht verlassen und setzt sich keiner zusätzlichen Gefahr aus.

Die Erfindung kann es weiter vorsehen, dass dem Signalelement ein Bedienelement zugeordnet ist, insbesondere fest zugeordnet ist, durch das sich das Signalelement steuern lässt, insbesondere das Bedienelement Fixiermittel, vorzugsweise eine umlaufende Gummilippe aufweist. Mit dieser Gummilippe kann das Bedienelement an der Fahrzeugscheibe fixiert werden. Damit der Fahrzeuginsasse das Bedienelement bequem bedienen kann, ohne dass dieses sich bewegt, ist es durch die Gummilippe oder sonstige Fixiermittel von innen an der Fahrzeugscheibe fixierbar.

Bevorzugt sieht es die Erfindung weiter vor, dass dem Bedienelement eine Halterung zum Befestigen der Vorrichtung an der Karosserie und/oder an der Fahrzeugscheibe des Fahrzeugs zugeordnet ist, insbesondere schwenkbar zugeordnet ist und die Halterung als Klemme, Klammer, Saugnapf, Magnet oder Ähnliches ausgebildet ist. Zum Befestigen der Halterung an der Fahrzeugscheibe wird die Fahrzeugscheibe geringfügig geöffnet, um die Halterung auf die Fensterscheibe zu klemmen. Je nach Ausführung der Halterung ist sodann die Fensterscheibe wieder zu schließen, damit die Halterung zwischen Fensterscheibe und Türrahmen festgeklemmt wird. Es ist jedoch auch denkbar, dass die Halterung alternativ Magnete aufweist, mit denen die Vorrichtung an der Karosserie des Fahrzeuges befestigbar ist. Damit die Halterung bequem an der Fensterscheibe befestigt werden kann und das Bedienelement gleichzeitig noch für den Fahrzeuginsassen vorteilhaft ausrichtbar bleibt, sind die Halterung und das Bedienelement, vorzugsweise durch kleine Stege, schwenkbar miteinander verbunden. Das Bedienelement lässt sich parallel zu der Fahrzeugscheibe bewegen und somit bequem mittels des Fixiermittels an der Fensterscheibe fixieren. Unabhängig von der Beschaffenheit der Halterung sieht es die Erfindung vor, dass das Bedienelement bei der Benutzung der Vorrichtung innerhalb des Fahrzeuges positioniert ist, während das Signalelement sich außerhalb des Fahrzeuges befindet.

Bevorzugt kann es die vorliegende Erfindung weiter vorsehen, dass dem Bedienelement eine Luftzufuhrvorrichtung zum Aufblasen des Signalelements zugeordnet ist, insbesondere die Luftzufuhrvorrichtung in das Bedienelement integriert ist. Bei der Luftzufuhrvorrichtung kann es sich vorzugsweise um ein Gebläse oder um eine Druckluftpatrone handeln. Desweiteren ist es vorgesehen, dass die Luftzufuhrvorrichtung durch eine Luftleitung, insbesondere durch einen Schlauch mit dem Signalelement verbunden ist. Es ist außerdem erfindungsgemäß denkbar, dass die Luftzufuhrvorrichtung, insbesondere die Druckluftpatrone einen Teil der Halterung, das gleichzeitig die Schwenkachse des Bedienelements beschreibt, zugeordnet ist. Da sich demnach die Luftzufuhrvorrichtung innerhalb des Fahrzeuges befindet und das aufzublasende Signalelement außerhalb des Fahrzeuges, wird die Druckluft durch einen dünnen Schlauch, der Form der Halterung, insbesondere einer Klammer folgend, dem Signalelement zugeführt. Für den Fall, dass die Luftzufuhrvorrichtung als Gebläse ausgebildet ist, kann es die Erfindung vorsehen, dass die Luft aus dem Signalelement durch das Gebläse wieder hinaus gesaugt wird. Alternativ oder zusätzlich ist es außerdem denkbar, dass dem Signalelement ein Ventil zugeordnet ist, das nach Verwendung der Vorrichtung geöffnet werden kann, um die Luft entweichen zu lassen.

Des Weiteren ist der Luftzufuhrvorrichtung bzw. der Luftleitung ein Rückschlagventil zugeordnet, so dass während des Aufblasens des Signalelements bzw. nach Aufblasen des Signalelements keine Luft durch die Luftleitung entweichen kann.

Ein weiteres bevorzugtes Ausführungsbeispiel der vorliegenden Erfindung sieht es vor, dass das aufgeblasene Signalelement in einer Ausgangsstellung quer zu einer Längsachse des Fahrzeugs und parallel zu einer Straßenoberfläche ausrichtbar ist und vorzugsweise mindestens teilweise in einen Fahrbahnbereich hineinragt. Dazu ist das Signalelement vorzugsweise im aufgeblasenen Zustand als keilförmiges Dreieck ausgebildet, wobei die Basis dieses Dreiecks transparent ausgebildet sein kann. Das Dreieck hat eine Höhe von 50 cm, vorzugsweise 80 cm, insbesondere 1 m. Demnach ragt das Dreieck bzw. das Signalelement dessen Höhe entsprechend in die Fahrbahn bzw. weist in Richtung der Fahrbahn. Mit der Basisfläche berührt das Dreieck die Fahrzeugscheibe, wobei es gleichzeitig um eine Seitenkante der Basis, die mit der Halterung der Vorrichtung fest verbunden ist, schwenkbar ist. Durch diese schwenkbare Zuordnung des Signalelements kann es Windstößen, die beispielsweise durch nachfolgende Fahrzeuge erzeugt werden, nachgeben.

Weiter kann es die Erfindung vorsehen, dass der Halterung, insbesondere dem Bedienelement ein Rückhaltemittel zuordbar ist, vorzugsweise das Rückhaltemittel an der Halterung oder dem Bedienelement befestigbar, insbesondere ansteckbar oder anklippsbar ist, um den Bereich, über den das Signalelement um die Achse schwenkbar ist, einzuschränken. Das Rückhaltemittel bewirkt, dass das Signalelement bei starken Windstößen nicht auf das Fahrzeugdach geschlagen wird. Vielmehr schränkt das Rückhaltemittel die Bewegungsfreiheit des Signalelements ein, so dass die Signalwirksamkeit der Vorrichtung erhalten bleibt. Das Rückhaltemittel bildet mit der Horizontalen in etwa einen Winkel von 10° bis 30°, vorzugsweise 30° bis 45°.

Insbesondere kann es die vorliegende Erfindung weiter vorsehen, dass dem Signalelement Reflektoren und/oder Leuchtmittel, insbesondere LEDs zugeordnet sind, wobei die LEDs in einem kontinuierlichen und/oder blitzlichtartigem Modus, vorzugsweise in verschiedenen Farben betreibbar sind und eine Spannungsversorgung für die LEDs, wie beispielsweise mindestens eine Batterie, vorzugsweise in das Bedienelement integriert und über das Bedienelement steuerbar sind. Für eine erhöhte Kennzeichnungskraft des Signalelements können beispielsweise Reflektoren an der Seite des Signalelements pfeilartig ausgebildet sein, um nachfolgenden Fahrzeugen zu kennzeichnen, an welcher Seite das liegengebliebene Fahrzeug zu überholen ist. Alternativ oder zusätzlich können Bereiche an dem Signalelement transparent, insbesondere als transparente Pfeile oder andere Warnzeichen ausgebildet sein. Durch die Leuchtmittel, bzw. die LEDs leuchten sodann die transparenten Flächen des Signalelements. Die LEDs, die vorzugsweise dem Bedienelement zugeordnet sind, leuchten durch das transparente Basisteil des Signalelements in das Innere des Signalelements und kennzeichnen bevorzugt transparente Flächen des Signalelements. Je nach Wahl des Betriebsmodus der LEDs erleuchtet somit das Signalement in verschiedenen Farben kontinuierlich oder blitzlichtartig. Der Betriebsmodus der Leuchtmittel kann von den Fahrzeuginsassen aus dem Fahrzeug heraus über das Bedienelement eingestellt werden. Alternativ zu einer Batterie kann das Bedienelement außerdem eine Steckerbuchse aufweisen, über die die Leuchtmittel mit der 12 Volt Bordspannung des Fahrzeuges versorgbar ist.

Die Erfindung kann es weiter vorsehen, dass das unaufgeblasene Signalelement, das Bedienelement und das Rückhaltemittel in einer Tasche verstaubar sind, vorzugsweise sich zum Verstauen in der Tasche das unaufgeblasene Signalelement um das Bedienelement und das Rückhaltemittel wickeln lässt. Dazu sind die beiden Bügel des Rückhaltemittels von der Halterung abzunehmen und ein die beiden Bügel verbindendes Gummiband von den Bügeln zu lösen. Nach dem Zerlegen des Rückhaltemittels lassen sich alle Elemente in das luftleere Signalmittel einwickeln und in der Tasche verstauen.

Ein bevorzugtes Ausführungsbeispiel der erfindungsgemäßen Vorrichtung wird anhand der folgenden Zeichnung näher erläutert.
- Fig. 1: eine Sicht auf ein Fahrzeug mit einer Vorrichtung,
- Fig. 2: eine Rückansicht des Fahrzeugs mit der Vorrichtung,
- Fig. 3: eine Ansicht der Vorrichtung mit aufgeblasenem Signalelement, und
- Fig. 4: eine Ansicht der Vorrichtung ohne Signalelement.

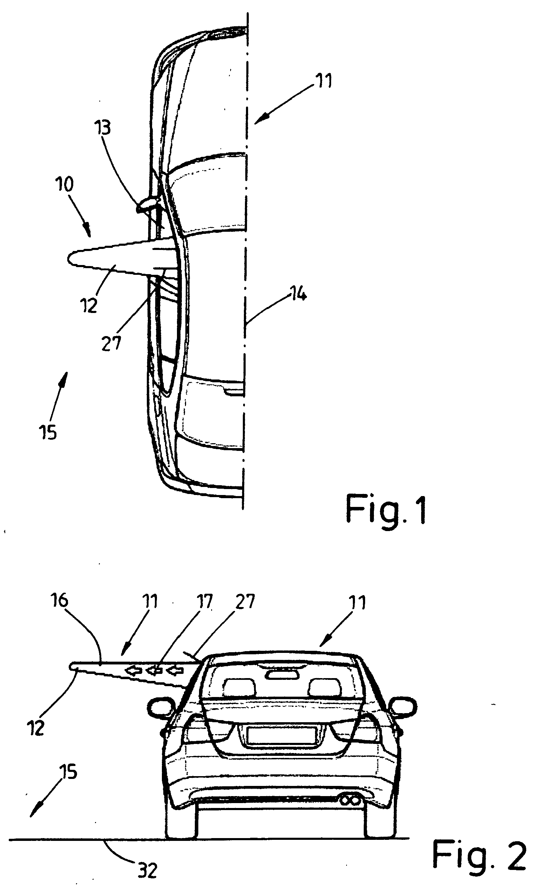

Gemäß der vorliegenden Erfindung dient eine Vorrichtung 10 der Kennzeichnung eines liegengebliebenen Fahrzeuges 11. Es sei ausdrücklich darauf hingewiesen, dass die erfindungsgemäße Vorrichtung 10 nicht auf die Verwendung in Kombination mit einem PKW, wie in den Fig. 1 und 2 dargestellt, beschränkt ist. Vielmehr ist es erfindungsgemäß vorgesehen, dass die Vorrichtung 10 auch für LKWs oder Motorräder nutzbar ist.

Zur Kennzeichnung des liegengebliebenen Fahrzeuges 11 wird die Vorrichtung 10 bzw. ein Signalelement 12 der Vorrichtung 10 aufgeblasen. Zur Verwendung der Vorrichtung 10 erstreckt sich das Signalelement 12 aus einer Fahrzeugscheibe 13 (Fig. 1). Das als Dreieck ausgebildete Signalelement 12 erstreckt sich so quer zu einer Längsachse 14 des Fahrzeugs 11 in Richtung des Fahrbahnbereichs 15. Die Höhe bzw. die Länge des dreieckartigen Signalelements 12 kann abhängig von der Ausführungsform der Vorrichtung 10 variieren. Als besonders vorteilhafte Länge hat sich 80 cm bzw. 1 m etabliert.

Einer Seitenfläche 16 des Signalelements 12 können Reflektoren 17, welche beispielsweise pfeilartig ausgebildet sind, zugeordnet sein (Fig. 2). Für nachfolgende Fahrzeuge treten diese Reflektoren 17 hervor und verweisen die nachfolgenden Fahrzeuge auf die Seite an der das liegengebliebene Fahrzeug 11 zu überholen ist. Diese Reflektoren 17 können jedoch auch als transparente Teilflächen der Seitenfläche 16 ausgebildet sein. Bei einer Beleuchtung des Signalelements 12 von innen heraus, leuchten die transparenten Teilflächen hell auf.

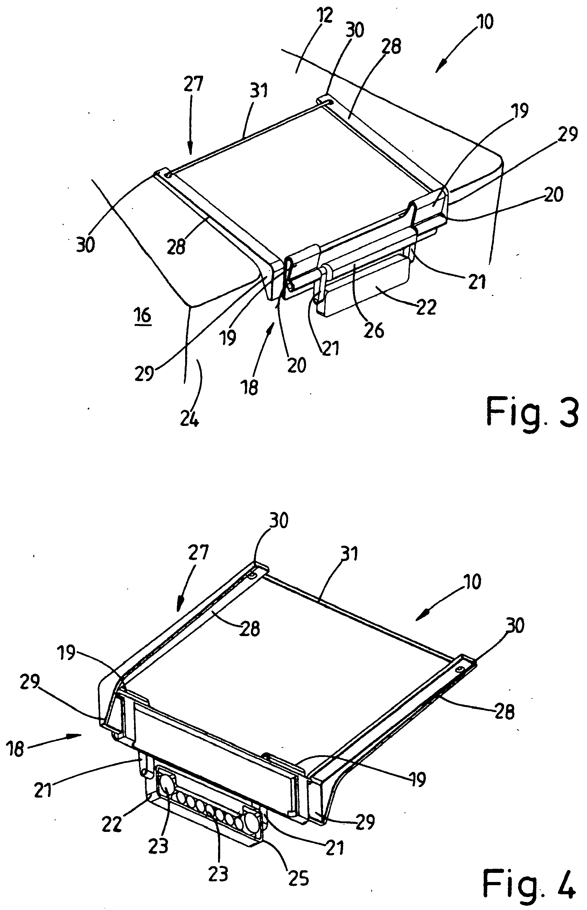

Zur Befestigung der Vorrichtung 10 an dem Fahrzeug 11, insbesondere an der Fahrzeugscheibe 13 weist die Vorrichtung 10 eine Halterung 18 auf. Bei dem in Fig. 3 dargestellten Ausführungsbeispiel der Vorrichtung 10 weist die Halterung 18 zwei Klemmen 19 auf, die auf die herabgelassene Fahrzeugscheibe 13 aufgeschoben werden können. Um die Befestigung der Vorrichtung 10 zu verstärken, kann die Fahrzeugscheibe 13 wieder geschlossen werden, so dass die Klemmen 19 zusätzlich zwischen der Fahrzeugscheibe 13 und einem Türrahmen eingeklemmt werden. Es ist erfindungsgemäß auch denkbar, dass die Halterung 18 keine weiteren Klemmmittel aufweist, sondern lediglich zwischen Fahrzeugscheibe 13 und Türrahmen eingeklemmt wird.

An den offenen Enden 20 der Klemmen 19 ist über stabförmige Schwenkmittel 21 ein Bedienelement 22 schwenkbar mit den Klemmen 19 verbunden. Das Bedienelement 22 dient der Bedienung, insbesondere der Steuerung der Vorrichtung 10 bzw. des Signalelements 12. Dazu weist es nicht dargestellte Bedienmittel, wie beispielsweise Knöpfe oder Schalter auf.

Auf einer der Fahrzeugscheibe 13 zugewandten Seite des Bedienelements 22 weist dieses mehrere LEDs 23 auf. Diese LEDs 23 können von dem Bedienelement 22 gesteuert werden. Für die Generierung verschiedener Signale ist es vorgesehen, dass dem Bedienelement 22 verschiedenfarbige LEDs 23 zugeordnet sind, die wahlweise kontinuierlich oder blitzlichtartig betrieben werden können. Für die Erzeugung eines Signals strahlen die LEDs 23 durch eine transparente Basis 24 des dreieckförmigen Signalelements 12 in das Signalelement 12 hinein und lassen somit die transparenten Bereiche an der Seitenfläche 16 des Signalelements 12 erleuchten. Damit das Bedienelement 22 während des Betriebs der LEDs 23 nicht verrutscht, ist dem Bedienelement 22 eine Gummilippe 25 zugeordnet, welche das Bedienelement 22 an der Fahrzeugscheibe 13 fixieren soll.

Dem offenen Ende 20 der Klemme 19 ist des Weiteren als Verlängerung der Schwenkachse der Schwenkmittel 21 eine Luftzufuhrvorrichtung 26 zugeordnet. Bei dieser Luftzufuhrvorrichtung 26 kann es sich beispielsweise um ein Gebläse handeln, welches über eine nicht dargestellte Luftleitung bzw. einen dünnen Schlauch Luft in das Signalelement 12 bläst. Zum Ablassen der Luft aus dem Signalelement 12 kann das Gebläse rückwärts betrieben werden, so dass es Luft ansaugt. Alternativ sieht es die Erfindung außerdem vor, dass in die Luftzufuhrvorrichtung 26 Druckluftpatronen integriert sind, die bei Benutzung der Vorrichtung 10 Luft über einen dünnen Schlauch in das Signalelement 12 leiten. Die Luftzufuhrvorrichtung 26 wird ebenfalls über das Bedienelement 22 gesteuert.

Als Spannungsversorgung für die Luftzufuhrvorrichtung 26 und/oder das Bedienelement 22 bzw. die LEDs 23 dienen Batterien, die der Luftzufuhrvorrichtung 26 und/oder dem Bedienelement 22 zugeordnet sind. Alternativ ist es jedoch auch denkbar, dass dem Bedienelement 22 eine nicht dargestellte Anschlussbuchse zugeordnet ist, über die die Vorrichtung 10 durch den 12 Volt Bordanschluss des Fahrzeuges 11 versorgt werden kann.

Damit durch auftretende Windstöße das Signalelement 12 nicht auf das Dach des Fahrzeuges 11 schlägt, ist der Halterung 18 ein Rückhaltemittel 27 zugeordnet. Dieses Rückhaltemittel 27 besteht aus zwei parallelen Bügeln 28, die mit einem ersten Ende 29 seitlich auf die Halterung 18 geschoben werden und gegebenenfalls einrasten. Die zweiten Enden 30 der Bügel 28 sind über ein Verbindungsmittel, insbesondere ein Gummiband 31 miteinander verbindbar. Dieses Gummiband 31 wird den beiden zweiten Enden 30 unter mechanischer Spannung (Eigenspannung) zugeführt, so dass durch die Spannung des Gummibands 31 die Bügel 28 zusammengehalten werden. Die Bügel 28 beschreiben relativ zu einer Horizontalen 32 einen Winkel von vorzugsweise 30° bis 60°. Bei einem durch ein nachfolgendes Fahrzeug erzeugten Windstoß stößt das Signalelement 12 nun gegen das Rückhaltemittel 27 bzw. gegen die Bügel 28 und das Gummiband 31 und kann somit nicht auf das Dach des Fahrzeugs 11 stoßen.

Das Signalelement 12, das vorzugsweise aus einem Kunststoffsack hergestellt ist, ist mit der Halterung 18 fest verbunden. Zum Ablassen der Luft kann das Signalelement 12 zusätzlich ein Ventil aufweisen, das manuell durch den Fahrzeuginsassen geöffnet werden kann.

Nach Gebrauch der Vorrichtung 10 wird die Luft aus dem Signalelement 12 abgelassen, das Gummiband 31 von dem Bügel 28 entfernt, die Bügel 28 von der Halterung 18 gezogen und zusammen mit der Halterung 18 und dem Bedienelement 22 in dem Signalelement12 eingerollt, um dann in einer Tasche verstaut zu werden.

### Bezugszeichenliste:

- 10: Vorrichtung
- 11: Fahrzeug
- 12: Signalelement
- 13: Fahrzeugscheibe
- 14: Längsachse
- 15: Fahrbahnbereich
- 16: Seitenfläche
- 17: Reflektor
- 18: Halterung
- 19: Klemme
- 20: offenes Ende
- 21: Schwenkmittel
- 22: Bedienelement
- 23: LED
- 24: Basis
- 25: Gummilippe
- 26: Luftzufuhrvorrichtung
- 27: Rückhaltemittel
- 28: Bügel
- 29: erstes Ende
- 30: zweites Ende
- 31: Gummiband
- 32: Horizontale

## Patentansprüche

1. Vorrichtung (10), insbesondere Signalmittel zum Anbringen an eine Fahrzeugscheibe (13), mit einem Signalelement (12), wobei durch das Anbringen des Signalelements (12) ein Querschnitt des Fahrzeuges (11) vergrößert wird, wodurch sich eine Sicherheitszone am Fahrzeug (11) bildet, **dadurch gekennzeichnet, dass** das Signalelement (12) aufblasbar ist.

2. Vorrichtung (10) nach Anspruch 1, **dadurch gekennzeichnet, dass** dem Signalelement (12) ein Bedienelement (22) zugeordnet ist, insbesondere fest zugeordnet ist, durch das sich das Signalelement (12) steuern lässt, insbesondere das Bedienelement (22) Fixiermittel, vorzugsweise eine umlaufende Gummilippe (25) aufweist, zum Fixieren an der Fahrzeugscheibe (13).

3. Vorrichtung (10) nach Anspruch 1 oder 2, **dadurch gekennzeichnet, dass** dem Bedienelement (22) eine Halterung (18) zum Befestigen der Vorrichtung (10) an der Karosserie und/oder an der Fahrzeugscheibe (13) des Fahrzeuges (11) zugeordnet ist, insbesondere schwenkbar zugeordnet ist und die Halterung (18) als Klemme (19), Klammer, Saugnapf, Magnet oder Ähnliches ausgebildet ist,

4. Vorrichtung (10) nach einem der vorhergehenden Ansprüche, **dadurch gekennzeichnet, dass** die Halterung (18) zwischen einer Fensterscheibe (23) und einem Türrahmen des Fahrzeuges (11) festklemmbar ist, wobei sich vorzugsweise das Bedienelement (22) innerhalb des Fahrzeugs (11) und das Signalelement (12) außerhalb des Fahrzeugs (11) befinden.

5. Vorrichtung (10) nach einem der vorhergehenden Ansprüche, **dadurch gekennzeichnet, dass** dem Bedienelement (22) eine Luftzufuhrvorrichtung (26) zum Aufblasen des Signalelements (12) zugeordnet ist, insbesondere die Luftzufuhrvorrichtung (26) in das Bedienelement (22) integriert ist, wobei es sich bei der Luftzufuhrvorrichtung (26) vorzugsweise um ein Gebläse oder um eine Druckluftpatrone handelt und die Luftzufuhrvorrichtung (26) durch eine Luftleitung, insbesondere einen Schlauch mit dem Signalelement (12) verbunden ist.

6. Vorrichtung (10) nach einem der vorhergehenden Ansprüche, **dadurch gekennzeichnet, dass** das aufgeblasene Signalelement (12) quer zu einer Längsachse (14) des Fahrzeuges (11) und wenigstens in einer Ausgangsstellung parallel zu einer Straßenoberfläche ausrichtbar ist und vorzugsweise mindestens teilweise in einen Fahrbahnbereich (15) hineinragt.

7. Vorrichtung (10) nach einem der vorhergehenden Ansprüche, **dadurch gekennzeichnet, dass** das aufgeblasene Signalelement (12) als keilförmiges Dreieck ausgebildet ist, wobei eine, vorzugsweise transparente, Basis (24) des Dreiecks an der Fahrzeugscheibe (13) anliegt und um eine Achse schwenkbar ist.

8. Vorrichtung (10) nach einem der vorhergehenden Ansprüche, **dadurch gekennzeichnet, dass** der Halterung (18), insbesondere dem Bedienelement (22) ein Rückhaltemittel (27) zuordbar ist, vorzugsweise das Rückhaltemittel (27) an der Halterung (18) oder dem Bedienelement (22) befestigbar, insbesondere ansteckbar oder anklipsbar ist und den Bereich, über den das Signalelement (12) um die Achse schwenkbar ist, einschränkt.

9. Vorrichtung (10) nach einem der vorhergehenden Ansprüche, **dadurch gekennzeichnet, dass** dem Signalelement (12) Reflektoren (17) und/oder Leuchtmittel, insbesondere LEDs (23) zugeordnet sind, wobei die LEDs (23) in einem kontinuierlichen und/oder blitzlichtartigen Modus, vorzugsweise in verschiedenen Farben, betreibbar sind und eine Spannungsversorgung für die LEDs (23), wie beispielsweise mindestens eine Batterie, vorzugsweise in das Bedienelement (22) integriert und über das Bedienelement (22) steuerbar sind.

10. Vorrichtung (10) nach einem der vorhergehenden Ansprüche, **dadurch gekennzeichnet, dass** das unaufgeblasene Signalelement (12), das Bedienelement (22) und das Rückhaltemittel (27) in einer Tasche verstaubar sind, vorzugsweise sich zum Verstauen in der Tasche das unaufgeblasene Signalelement (12) um das Bedienelement (22) und das Rückhaltemittel (27) wickeln lässt.
